# EUROPÄISCHE PATENTSCHRIFT

(11) **EP 1 188 003 B1**
(45) Veröffentlichungstag und Bekanntmachung des Hinweises auf die Patenterteilung: **23.07.2003**
(21) Anmeldenummer: 00931156.4
(22) Anmeldetag: 10.05.2000
(51) Int. Cl.: F16H 7/12

(54) **SPANNEINRICHTUNG FÜR ZUGMITTEL WIE RIEMEN ODER KETTEN**
TENSIONING DEVICE FOR TRACTION MEANS SUCH AS BELTS OR CHAINS
DISPOSITIF DE TENSION POUR MOYENS D'ENTRAINEMENT TELS QUE COURROIES OU CHAINES

(30) Priorität: 11.06.1999 DE 19926615
(43) Veröffentlichungstag der Anmeldung: 20.03.2002
(73) Patentinhaber: INA-Schaeffler KG, 91074 Herzogenaurach (DE)
(72) Erfinder: BOGNER, Michael, D-90542 Eckental (DE)
(86) Internationale Anmeldenummer: EP0004162
(87) Internationale Veröffentlichungsnummer: WO00077422

(56) Entgegenhaltungen:
- DE-A- 4 243 451
- DE-A- 19 631 507
- US-A- 4 758 208
- PATENT ABSTRACTS OF JAPAN vol. 018, no. 363 (M-1635), 8. Juli 1994 (1994-07-08) & JP 06 094091 A (TOKYO ELECTRIC CO LTD), 5. April 1994 (1994-04-05)
- PATENT ABSTRACTS OF JAPAN vol. 010, no. 176 (M-491), 20. Juni 1986 (1986-06-20) & JP 61 024868 A (FUJI XEROX CO LTD), 3. Februar 1986 (1986-02-03)

## Beschreibung

### Gebiet der Erfindung

Die Erfindung betrifft eine Spanneinrichtung für Zugmittel wie Riemen oder Kette, mit einem gehäuseartigen Teil, in dem ein Spannmittel und ein dieses belastendes Federelement zum Spannen des Zugmittels aufgenommen sind, wobei die Spanneinrichtung an einem eine Triebwelle aufweisenden Aggregat des Zugmitteltriebs bei drehfester Anordnung des gehäuseartigen Teils, die Triebwelle umgreifend anbringbar ist.

Eine solche Spanneinrichtung ist aus der gattungsgemäßen DE 196 31 507 A1 bekannt. Das dort beschriebene Spannmittel umfasst einen Hebel nebst Spannrolle, wobei der Hebel in einem topfartigen Gehäuseteil aufgenommen ist, in dem sich ebenfalls ein Federelement in Form einer Schraubendrehfeder befindet. Diese stützt sich mit einem Ende an dem Gehäuseteil ab, welches im an einem im Zugmitteltrieb integrierten Aggregat befestigten Zustand drehfest ist, mit dem anderen Ende greift das Federelement an dem Hebel an, so dass dieser federkraftbeaufschlagt ist und das über die Spannrolle laufende Zugmittel spannen kann. Die in der genannten Veröffentlichung beschriebene Spanneinrichtung ist auf ein Aggregat in Form einer Pumpe aufgesetzt, welche über das Zugmittel angetrieben wird, das einerseits über die Spannrolle, andererseits über eine Riemenscheibe läuft, die auf einer Triebwelle des Aggregats, die das Gehäuseteil zentral durchsetzt, angeordnet ist, und die das Gehäuseteil im Wesentlichen in sich aufnimmt. Mit dieser bekannten Spanneinrichtung ist es möglich, das Zugmittel im Leertrum, welches bei der beschriebenen Ausgestaltung stets an derselben Zugmittelseite vorliegt, zu spannen.

Gegenwärtig werden Startergeneratoren entwickelt, wobei das Zugmittel in diesem Fall einerseits über den Startergenerator, andererseits über die Kurbelwelle des Motors geführt ist. Der Startergenerator hat zwei Funktionen. Zum einen dient er zum Starten des Motors, d.h., er selbst treibt über eine Riemenscheibe das Zugmittel und damit die Kurbelwelle an. Läuft der Motor, so arbeitet der Startergenerator als reiner Generator, d.h., er wird über die dann selbst angetriebene Kurbelwelle und das Zugmittel getrieben. Dies führt dazu, dass abhängig von der Betriebsart des Startergenerators die Lage des Leertrums wechselt. Mit der vorbekannten Spanneinrichtung ist es aber nicht möglich, diesen Wechsel zu kompensieren und unabhängig von der Betriebsart des Startergenerators das Leertrum spannen zu können.

Ähnliche Spanneinrichtungen mit zwei Spannarmen sind, aus der US 4 758 208 A und der DE 4 243 451 A bekannt.

Der Erfindung liegt dabei das Problem zugrunde, eine Spanneinrichtung anzugeben, die es ermöglicht, bei Drehmomentumkehr, wie beispielsweise bei Einsatz eines Startergenerators gegeben, das je nach Betriebszustand vorhandene Leertrum spannen zu können bei gleichzeitig geringem Bauraumbedarf.

### Zusammenfassung der Erfindung

Zur Lösung dieses Problems ist eine Spanneinrichtung gemäß Anspruch 1 vorgesehen, wobei das Spannmittel zwei im gehäuseartigen Teil um Achsen und gegeneinander drehbar gelagerte Spannarme umfasst, die mittels des gemeinsamen Federelements, das mit einem Ende am einen Spannarm und mit dem anderen Ende am anderen Spannarm gehaltert ist, federbelastet sind. Das Federelement ist demzufolge nicht gestellfest abgestützt. Die beiden Spannarme können um eine gemeinsame Drehachse schwenkbar angeordnet sein. Die beiden Drehachsen der beiden Spannarme können auch voneinander beabstandet sein. Vorzugsweise fallen die Drehachsen der Triebewelle des Aggregats mit den Drehachsen der Spannarme zusammen. Es ist jedoch auch möglich, daß die Drehachse der Spannarme von der Drehachse der Triebwelle beabstandet ist.

Bei der erfindungsgemäßen Spanneinrichtung kommen vorteilhaft zwei unabhängig voneinander und bevorzugt in derselben Ebene drehbar im gehäuseartigen Teil gelagerte Spannarme mit entsprechenden Spannrollen zum Einsatz, die an verschiedenen Abschnitten des Zugmittels angreifen. Im Falle einer Drehmomentumkehr im Zugmitteltrieb greift also stets ein federbelasteter Spannarm am momentan gegebenen Leertrum an und spannt dieses. Hierdurch wird sichergestellt, dass auch bei Drehmomentumkehr stets für eine ausreichende Zugmittelspannung gesorgt ist und ein einwandfreier Betrieb des Zugmitteltriebs möglich ist. Bedingt durch die Lagerung der Spannarme im gehäuseartigen Teil, welches gleichzeitig auch das beide Spannarme belastende Federelement, bevorzugt eine Schraubendrehfeder aufnimmt, ist die quasi doppelt wirkende Spanneinrichtung, die auch als Pendelspanner bezeichnet werden kann, hinreichend klein, was es ermöglicht, die erfindungsgemäße Spanneinrichtung auch dort einzusetzen, wo wenig Raum gegeben ist, beispielsweise im Motorraum einer Brennkraftmaschine. Die erfindungsgemäße Spanneinrichtung kann als separates Bauelement komplett vorgefertigt werden und muss lediglich noch auf das Aggregat, eben beispielsweise den Startergenerator, aufgesetzt werden, wobei dessen Trieb welle lediglich noch mit der gegebenenfalls zur vormontierten Spanneinrichtung separaten Riemenscheibe gekoppelt werden muss. Neben den betriebstechnischen Vorteilen können mit der erfindungsgemäßen Spanneinrichtung also auch fertigungs- und montagetechnische Vorteile erzielt werden.

Die erfindungsgemäße Weiterbildung kann für Systemlieferanten der Automobilhersteller besonders zweckmäßig sein.

Nach einer besonderen Erfindungsausgestaltung kann vorgesehen sein, dass jeder Spannarm einen ringartigen Lagerschnitt aufweist, der einen zylindrischen Wandabschnitt des gehäuseartigen Teils umgreift, wobei der Lagerabschnitt des ersten Spannarms direkt am zylindrischen Wandabschnitt drehgelagert ist und der Lagerabschnitt des zweiten Spannarms in den des ersten Spannarms eingreift und an diesem drehgelagert ist. Gemäß dieser Ausgestaltung erfolgt die Lagerung der Arme mittels der ringartigen Lagerabschnitte die einen Wandabschnitt umgreifen. Der Lagerabschnitt des einen Arms ist im Durchmesser kleiner und ist unmittelbar an dem Wandabschnitt gelagert. In diesen greift der im Durchmesser etwas größere Lagerabschnitt des anderen Arms ein und ist direkt an diesem gelagert. Da beide Lagerabschnitte ineinander greifen, können hierdurch die Kippmomente reduziert werden. Die Spannarme liegen also unmittelbar aneinander an, was hinsichtlich einer Minimierung des Bauraumbedarfs in der Riemenebene vorteilhaft ist. Die Lagerung erfolgt bevorzugt über Gleit- oder Radiallager. Zur Anordnung des Federelements, bevorzugt in Form einer Schraubendrehfeder, hat es sich weiterhin als vorteilhaft erwiesen, wenn zwischen den ineinander greifenden Lagerabschnitten ein Ringraum gebildet ist, in welchem das Federelement aufgenommen ist.

Häufig kommt es im Betrieb eines Zugmitteltriebs, beispielsweise bei Einsatz an einer Brennkraftmaschine an der Kurbelwelle, zum Auftreten von betriebsbedingten Schwingungen, die über den Zugmitteltrieb auf Bauteile, hier beispielsweise das Aggregat, an dem die erfindungsgemäße Spanneinrichtung angeordnet ist, übertragen werden. Um diese Schwingungen, die beispielsweise durch Drehungleichförmigkeiten der Kurbelwelle hervorgerufen werden, dämpfen zu können, ist erfindungsgemäß zwischen dem gehäuseartigen Teil und einem Spannarm ein Reib- oder Dämpfungselement vorgesehen sein, beispielsweise in Form einer Reibscheibe oder eines Reibbelags. Diese Elemente bewirken sowohl die Dämpfung des Spannsystems gegen die Umgebung, als auch die innere Dämpfung. Als zweckmäßig hat es sich bei erwiesen, wenn das zwischen den Spannarmen befindliche Federelement die Spannarme axial gegen die Reib- oder Dämpfungselemente drängt. Das Federelement dient damit sowohl der Erzeugung der erforderlichen Spannkraft bzw. des erforderlichen Spannmoments als auch der erforderlichen axialen Vorspannkraft, um die Spannarme gegen die Reib- oder Dämpfungselemente zu drücken und somit die erforderliche Dämpfung aufzubauen.

Das gehäuseartige Teil weist erfindungsgemäß einen Bodenabschnitt, einen im Wesentlichen zylindrischen Wandabschnitt und einen Deckelabschnitt auf und besitzt einen nach außen offenen, im Wesentlichen C-förmigen Querschnitt, wobei im Rahmen der Montage der Spanneinrichtung der Deckelabschnitt oder der Bodenabschnitt lösbar sind, damit die Spannarme und das Federelement eingesetzt werden können. Die Fixierung erfolgt mittels bekannter Techniken, beispielsweise mittels eines Seegerrings oder dergleichen. Eine Verdrehsicherung ist ebenfalls vorgesehen.

Wie beschrieben wird die erfindungsgemäße Spanneinrichtung auf das im Zugmitteltrieb integrierte Aggregat achsparallel zu dessen Triebwelle, diese umgreifend aufgesetzt. Da bevorzugt die Spanneinrichtung ein vorfertigbares Element darstellt, welches lediglich noch auf das Aggregat aufgebracht werden muss, ist zur Ermöglichung einer einfachen Montage vorgesehen, dass das gehäuseartige Teil an einem einen Befestigungsbund, an welchem das gehäuseartige Teil anliegt, aufweisenden Flansch angeordnet ist, mittels welchem die Spanneinrichtung am Aggregat befestigbar ist. Der Flansch, der über entsprechende Befestigungsmöglichkeiten in Form von Bohrungen zum Einbringen von Befestigungsschrauben oder dergleichen verfügt, wird entsprechend der am Aggregat gegebenen Befestigungsmöglichkeit ausgebildet und im Rahmen der Montage dort adaptiert. D.h., das einzige Teil, welches hinsichtlich der Befestigung der Spanneinrichtung am Aggregat besonders ausgebildet sein muss, ist der Flansch.

Nach einer weiteren vorteilhaften Erfindungsausgestaltung kann vorgesehen sein, dass der Bodenabschnitt und der Wandabschnitt mittels eines Flansches gebildet sind, der zur Befestigung der Spanneinrichtung am Aggregat dient. Bei dieser Ausgestaltung bildet also der Befestigungsflansch gleichzeitig einen Teil des gehäuseartigen Teils. Der ringartige Lagerabschnitt des ersten Spannarms ist folglich direkt am Flansch gelagert, bodenseitig wird das Gehäuse ebenfalls mittels des Flansches abgeschlossen. Der Boden- wie auch der Wandabschnitt können bei dieser Erfindungsausgestaltung als separate Bauteile entfallen.

Wie beschrieben wird die erfindungsgemäße Spanneinrichtung auf ein im Zugmitteltrieb integriertes Aggregat wie beispielsweise den Startergenerator aufgesetzt, wobei dessen Triebwelle die Spanneinrichtung, die zu diesem Zweck eine zentrale Öffnung besitzt, durchgreift. Auf diese Triebwelle wird eine Riemenscheibe, um welche das Zugmittel geführt wird, gesetzt. Die Riemenscheibe kann insoweit ein separates Bauteil darstellen, welches nach Ansetzen der Spanneinrichtung an der Triebwelle angeordnet wird. Besonders zweckmäßig hat es sich jedoch erwiesen, wenn in einer der Aufnahme der Triebwelle des Aggregats dienenden Öffnung des gehäuseartigen Teils oder eines das gehäuseartige Teil tragenden Flanschs eine eine Riemen- oder Kettenscheibe tragende Welle drehbar angeordnet ist, die Verbindungsmittel zum Herstellen einer Drehverbindung mit der Triebwelle des Aggregats aufweist. Bei dieser Ausgestaltung der erfindungsgemäßen Spanneinrichtung ist die Riemen- oder Kettenscheibe in der Öffnung des gehäuseartigen Teils oder des Flansches über eine Welle drehbar angeordnet, sie bildet also einen integralen Teil der erfindungsgemäßen Spanneinrichtung. Während der Montage der Spanneinrichtung muss lediglich die die Riemen- oder Kettenscheibe tragende Welle mit der Triebwelle des Aggregats verbunden werden um die Bewegungskopplung zu realisieren. D.h., die derart ausgestaltete Spanneinrichtung bildet ein komplett vorfertigbares Bauteil, welches sämtliche erforderlichen Elemente aufweist. Die Verbindungsmittel sollten bevorzugt als Zahnprofil, vorzugsweise als Innenprofil ausgebildet sein, zweckmäßigerweise kann ein Keilwellenprofil verwendet werden.

Wie beschrieben kann es bei Einsatz der Spanneinrichtung innerhalb eines Zugmittettriebs, in welchem Drehungleichförmigkeiten auftreten, dazu führen, dass das Zugmittel ruckartige Bewegungen durchführt, die zu einem sehr schnellen Bewegen des Spannarms entgegen der Federkraft führen. Der Spannarm wird quasi durch das Schlagen des Zugmittels weggeschleudert. Um zu vermeiden, dass der Spannarm zu weit weg bewegt wird und er infolgedessen über einen beachtlich langen Zeitraum nicht am Zugmittel anliegt, kann erfindungsgemäß jedem Spannarm ein die Bewegung des Spannarms entgegen der Federkraft begrenzender Anschlag zugeordnet sein. Weiterhin hat es sich aus Montagezwecken als vorteilhaft erwiesen, wenn erfindungsgemäß jedem Spannarm ein die federkraftbedingte Bewegung begrenzender Anschlag zugeordnet ist. D.h., mit diesen Anschlägen wird vermieden, dass sich das Federelement entspannen kann.

In weiterer Erfindungsausgestaltung kann vorgesehen sein, dass die aus dem gehäuseartigen Teil nach außen ragenden Spannarme derart ausgebildet bzw. geformt sind, dass eine an der Triebwelle befestigbare oder drehbar an der Spanneinrichtung integrierte topfartige Riemenscheibe das gehäuseartige Teil seitlich umgreift. Das gehäuseartige Teil ist gemäß dieser Erfindungsausgestaltung also weitgehend in der topfartigen Riemen- oder Kettenscheibe aufgenommen. Dies führt dazu, dass der Bauraumbedarf in Riemenebene noch weiter minimiert werden kann, d.h., die Riemenebene liegt noch näher am Aggregat.

Neben der Spanneinrichtung selbst betrifft die Erfindung ferner eine Anordnung als Teil eines Zugmitteltriebs, insbesondere eines Riementriebs, umfassend eine Spanneinrichtung der vorbeschriebenen Art sowie ein als Startergenerator ausgebildetes Aggregat, an dem die Spanneinrichtung angeordnet ist.

Weiterhin betrifft die Erfindung die Verwendung einer Spanneinrichtung der vorbeschriebenen Art in einem Zugmitteltrieb in Verbindung mit einem im Zugmitteltrieb integrierten Aggregat in Form eines Startergenerators.

### Kurze Beschreibung der Zeichnungen

Nachstehend wird die Erfindung anhand mehrerer in den Figuren dargestellten Ausführungsbeispiele näher erläutert.

Es zeigen:
- Fig.: 1 eine Schnittansicht durch eine erfindungsgemäße Spanneinrichtung einer ersten Ausführungsform,
- Fig. 2: eine Prinzipskizze eines Zugmitteltriebs mit einer integrierten erfindungsgemäßen Spanneinrichtung,
- Fig. 3: eine Schnittansicht einer erfindungsgemäßen Spanneinrichtung einer zweiten Ausführungsform,
- Fig. 4: eine Schnittansicht einer erfindungsgemäßen Spanneinrichtung einer dritten Ausführungsform, und
- Fig. 5: eine Schnittansicht einer erfindungsgemäßen Spanneinrichtung einer vierten Ausführungsform.

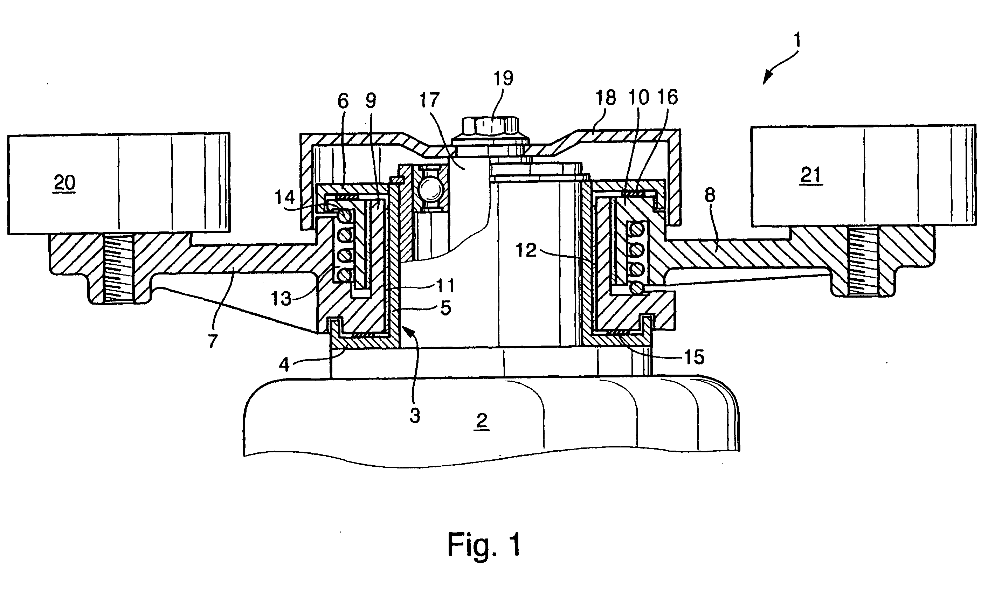

Fig. 1 zeigt eine erfindungsgemäße Spanneinrichtung 1, die an einem Aggregat 2, beispielsweise einem Startergenerator, angeordnet ist. Die Spanneinrichtung 1 umfasst ein zylinderförmiges gehäuseartiges Teil 3 bestehend aus einem Bodenabschnitt 4, einem Wandabschnitt 5 und einem Deckelabschnitt 6. Das gehäuseartige Teil 3 besitzt einen nach außen hin offenen, im Wesentlichen C-förmigen Querschnitt. In dem gehäuseartigen Teil 3 sind zwei Spannarme 7, 8 separat und gegeneinander drehbar gelagert. Zu diesem Zweck weist jeder Spannarm 7, 8 einen ringförmigen Lagerabschnitt 9, 10 auf. Mit dem ringförmigen Lagerabschnitt 9, 10 umgreifen die Lagerarme 7, 8 den Wandabschnitt 5 des drehfest bezüglich des Aggregats 2 stehenden gehäuseartigen Teils 3. Der Lagerabschnitt 9 ist über ein Gleit- oder Radiallager 11 unmittelbar drehbar an dem Wandabschnitt 5 gelagert. Der Lagerabschnitt 10 des Spannarms 8 ist im Durchmesser etwas größer bemessen und greift, wie aus Fig. 1 ersichtlich, in den Lagerabschnitt 9 ein. Über ein Gleit- oder Radiallager 12 ist der Lagerabschnitt 10 bezüglich des Lagerabschnitts 9 drehbar gelagert.

Zwischen den Lagerabschnitten 9, 10 bzw. in ihrem Bereich ist ein Ringraum 13 gebildet, in dem ein Federelement 14, hier eine Schraubendrehfeder, aufgenommen ist. Dieses Federelement ist mit einem Ende in bekannter Weise am Spannarm 7 bzw. dessen Lagerabschnitt 9 und mit dem anderen Ende am Spannarm 8 bzw. dessen Lagerabschnitt 10 angeordnet. Das Federelement 14 dient zur Erzeugung des erforderlichen Spannmoments und drängt die Spannarme 7, 8 aufeinander zu. Daneben dient das Federelement 14 zur Erzeugung der erforderlichen axialen Vorspannkraft, um die Spannarme 7, 8 bzw. deren Lagerabschnitt 9, 10 gegen am Bodenabschnitt 4 und am Deckelabschnitt 6 befindliche Reib- oder Dämpfungselemente 15, 16 zu drängen. Die Reib- oder Dämpfungselemente 15, 16 können beispielsweise fest mit dem Boden- oder Deckelabschnitt 4, 6 verbunden sein, d.h., der jeweilige Lagerabschnitt 9, 10 gleitet über diese Elemente. Hierdurch wird eine Dämpfung des gesamten Systems sowohl gegen die Umgebung als auch eine innere Dämpfung erzeugt, wobei diese Dämpfungen für die Funktion des Spannsystems relevant sind.

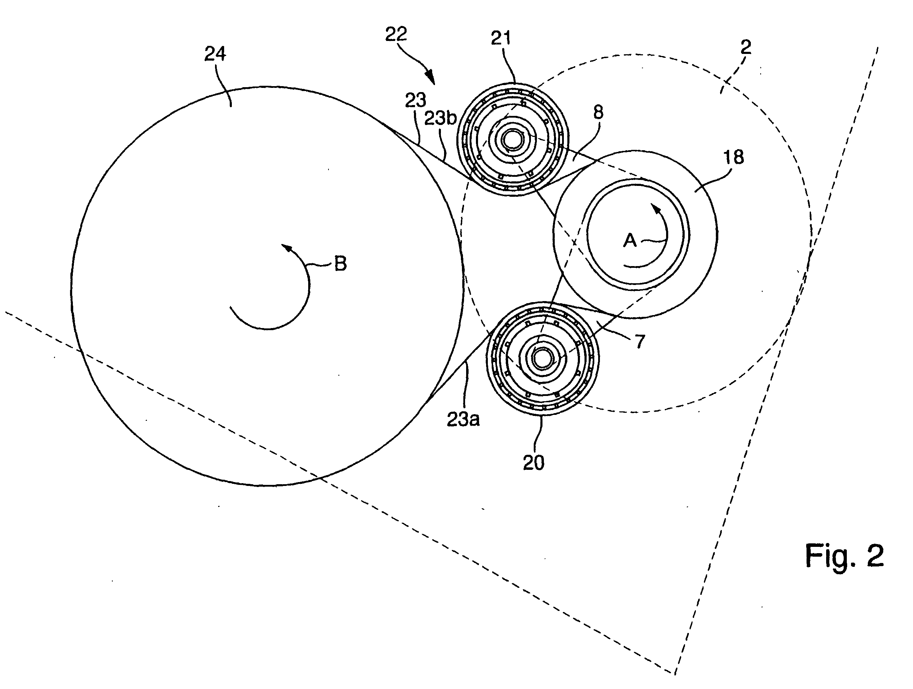

Die erfindungsgemäße Spanneinrichtung 1 kann komplett vormontiert werden und wird auf das Aggregat 2 aufgesetzt. Eine nicht näher gezeigte Triebwelle 17 des Aggregats, bezüglich welcher die Spanneinrichtung 1 achsparailel aufgesetzt ist, durchgreift die Spanneinrichtung 1 in einer entsprechenden Öffnung. Auf dieser Triebwelle 17 ist eine Riemen- oder Kettenscheibe 18 mittels einer Befestigungsschraube 19 angeordnet. Über diese Riemen- oder Kettenscheibe 18 sowie die an den Spannarmen 7, 8 befindlichen Spannrolien 20, 21 wird, wie nachfolgend bezüglich Fig. 2 beschrieben, das Zugmittel geführt. Ersichtlich umgreift die Riemen- oder Kettenscheibe 18 das gehäuseartige Teil 3 zumindest teilweise, was für eine kleinbauende Ausführung von Vorteil ist. Durch entsprechende Formgestaltung der Spannarme 7, 8 wäre es denkbar, die Riemen- oder Kettenscheibe noch weiter herunter zu ziehen, so dass die Riemenebene noch näher zum Aggregat 2 verlagert wird.

Fig. 2 zeigt nun in Form einer Prinzipskizze einen Zugmitteltrieb 22, in welchem die erfindungsgemäße Spanneinrichtung 1 eingesetzt wird. Von der Spanneinrichtung 1 sind lediglich die Spannrollen 20, 21 sowie die Spannarme 7, 8 gezeigt. Das Zugmittel 23, beispielsweise ein Riemen, ist über ein rotierendes Maschinenelement, beispielsweise eine Kurbelwelle 24 eines Brennkraftmotors sowie über die Riemenscheibe 18, die an der Triebwelle des Aggregats 2 angeordnet ist, geführt. Die beiden Spannrollen 20, 21 greifen außen am Zugmittel 23 an und drücken dieses nach innen, wodurch es gespannt wind. Die zum Zusammendrücken erforderliche Kraft wird mittels des Federelements 14 erzeugt.

Handelt es sich bei dem Aggregat 2 beispielsweise um einen Startergenerator, so ergeben sich abhängig vom Betriebsmodus des Startergenerators unterschiedliche Verhältnisse im Zugmitteltrieb 22. Wirkt der Startergenerator als Starter für eine Brennkraftmaschine, so treibt das Aggregat 2 über die Riemenscheibe 18 (Pfeil A) das Zugmittel 23 und damit die Kurbelwelle 24 an. Das bedeutet, dass der Zugmittelabschnitt 23a das Zugtrum und der Zugmittelabschnitt 23b das Leertrum bildet. Das Leertrum wird mittels des Spannarms 8 bzw. der Spannrolle 21 in diesem Fall gespannt. Arbeitet der Startergenerator als echter Generator, wenn also die Brennkraftmaschine läuft, so wird das Zugmittel 23 von der Kurbelwelle 24 getrieben, die in Richtung des Pfeils B rotiert. In diesem Fall bildet der Abschnitt 23b des Zugmittels 23 das Zugtrum, der Abschnitt 23a ist in diesem Fall das Leertrum. Dieses wird in diesem Fall über den Spannarm 7 bzw. die Spannrolle 20 gespannt. Die erfindungsgemäße Spanneinrichtung lässt also auch bei Drehmomentumkehr, wie bei Integration eines Startergenerators in den Zugmittelbetrieb der Fall, ein Spannen des wechsefnden Leertrums in jedem Betriebsmodus zu.

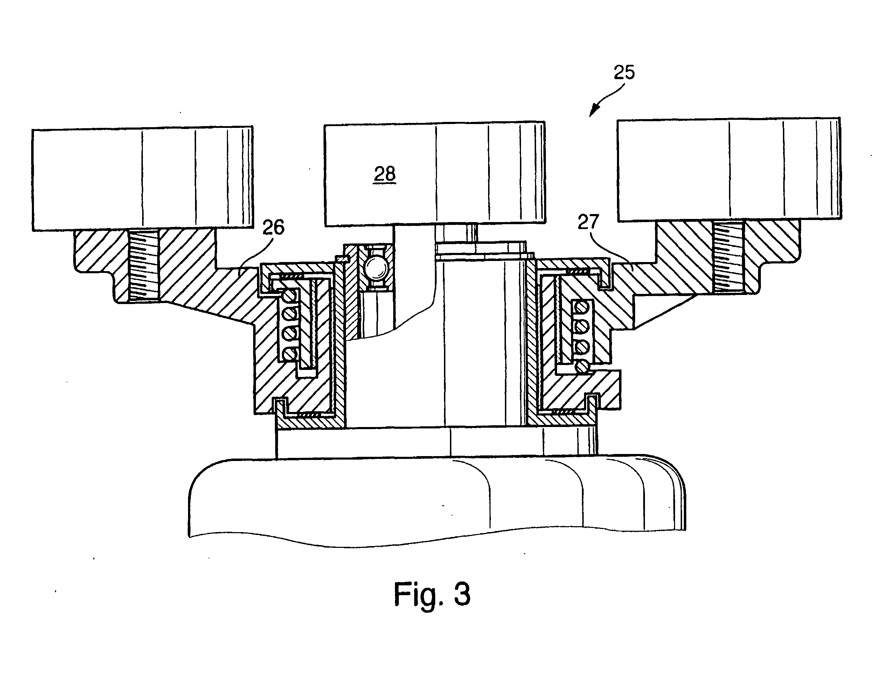

Fig. 3 zeigt eine weitere Ausführungsform einer erfindungsgemäßen Spanneinrichtung 25. Diese in insoweit entsprechend der Spanneinrichtung 1 aufgebaut, jedoch sind hier die Spannarme 26, 27 etwas anders geformt und insgesamt kürzer. Auch die Riemen- oder Kettenscheibe 28 ist etwas kleiner als im Vergleich zur Ausführungsform gemäß Fig. 1. Die Funktion ist insoweit die gleiche.

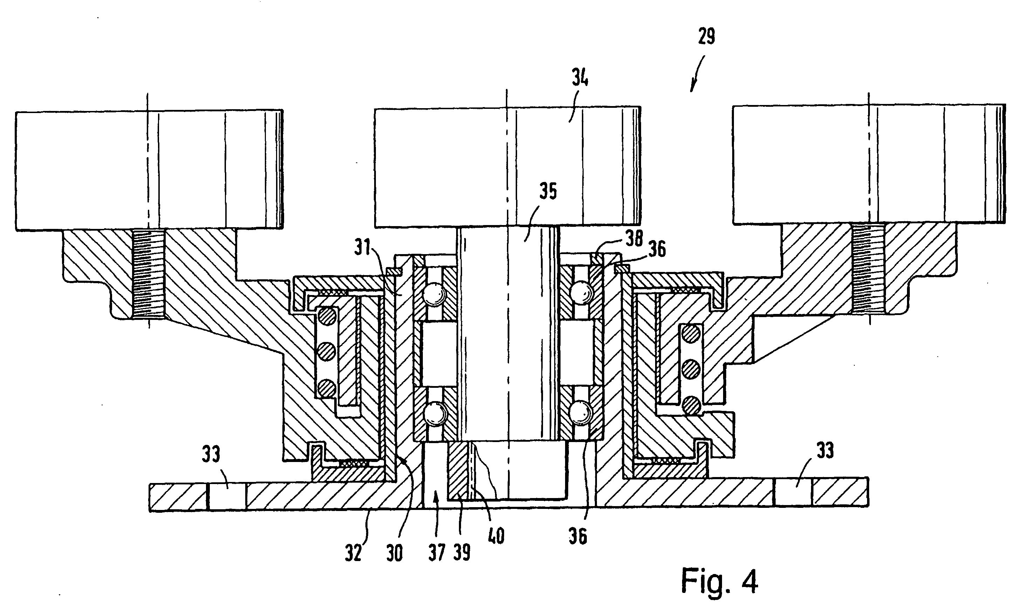

Fig. 4 zeigt eine weitere Ausgestaltung einer erfindungsgemäßen Spanneinrichtung 29. Diese entspricht in ihrem Aufbau insoweit der Spanneinrichtung 25, jedoch ist das gehäuseartige Teil 30 an einem Befestigungsbund 31 eines Flansches 32 angeordnet, an welchem das gehäuseartige Teil 30 aufsitzt. Mittels dieses Flanschs 32 wird die gesamte Spanneinrichtung 29 als komplett vormontiertes Bauteil am jeweiligen Aggregat befestigt, wozu der Flansch 32 entsprechende Befestigungsbohrungen 33 aufweist. Bei dieser Ausführungsform stellt auch die Riemen- oder Kettenscheibe 34 einen integralen Bestandteil der Spanneinrichtung 29 dar. Die Riemen- oder Kettenscheibe 34 ist über eine Welle 35 und entsprechende Lager 36 drehbar in der von dem Befestigungsbund 31 gebildeten zylindrischen Öffnung 37 angeordnet und in axialer Richtung über einen Ring 38 festgelegt. Die Welle 35 weist einen Befestigungsabschnitt 39 auf, welcher mit einem Keilwelleninnenprofil 40 versehen ist. In dieses Profil greift der Befestigungsabschnitt der entsprechend gegenprofilierten Triebwelle des Aggregats 2 ein, so dass Triebwelle und Welle 35 miteinander bewegungsgekoppelt werden. Hierdurch wird eine einfache Bewegungskopplung realisiert. Die gesamte Spanneinrichtung 29 muss also lediglich am Aggregat über den Flansch 32 befestigt werden, wodurch automatisch die Bewegungskopplung mit der Riemen- oder Kettenscheibe erreicht wird, zusätzliche Maßnahmen sind hierzu nicht erforderlich.

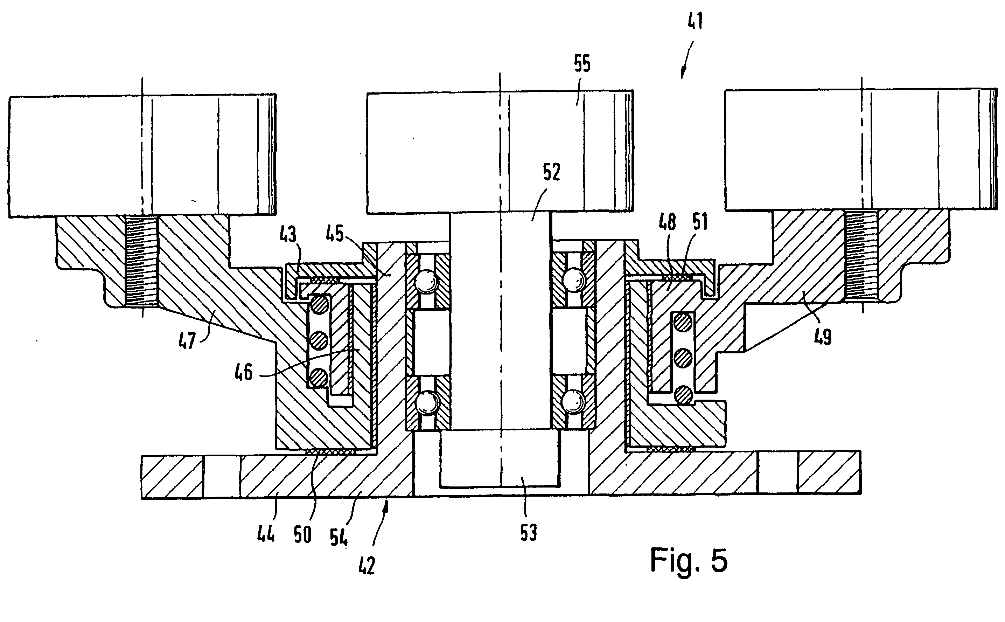

Schließlich zeigt Fig. 5 eine vierte Ausführungsform einer erfindungsgemäßen Spanneinrichtung 41. Die Funktionsweise ist die gleiche wie bezüglich der vorhergehenden Ausführungsformen beschrieben, jedoch wird hier das gehäuseartige Teil 42 einerseits durch den Deckelabschnitt 43 wie bei den vorbeschriebenen Ausführungsformen ebenfalls der Fall gebildet, der Wandabschnitt und der Bodenabschnitt werden jedoch mittels des Flansches 54 gebildet. Der horizontale Abschnitt 44 des Flansches 54 bildet hier den Bodenabschnitt, der vertikale Befestigungsbund 45 bildet den Wandabschnitt, auf welchem der Lagerabschnitt 46 des Spannarms 47, in dem wiederum der Lagerabschnitt 48 des Spannarms 49 gelagert ist, drehgelagert ist. Hier kommen dem Flansch 54 also mehrere Funktionen zu, einmal die Befestigungsfunktion am Aggregat, andererseits die Lagerfunktion für den Spannarm 47. Auch hier sind entsprechende Reib- oder Dämpfungselemente 50, 51 wie bei allen anderen Ausführungsformen ebenfalls der Fall, vorgesehen. Gleichermaßen ist auch hier die Riemen- oder Kettenscheibe 55 über eine Welle 52 direkt am Befestigungsbund 45 des Flanschs 54 drehgelagert und kann über einen entsprechenden Verbindungsabschnitt 53 mit der nichtgezeigten Triebwelle des Aggregats gekoppelt werden. Bei dieser Ausgestaltung entfallen also die bei der Ausgestaltung nach Fig. 4 vorhandenen separaten Boden- und Wandabschnitte des gehäuseartigen Teils.

Ferner ist festzuhalten, dass jede Spanneinrichtung zwei Anschläge, die in den Zeichnungen aus Übersichtlichkeitsgründen nicht näher dargestellt sind, aufweist, welche der Begrenzung der Bewegung jeweils eines Spannarms in entgegengesetzter Richtung zur von dem bei jeder Ausführungsform vorhandenen Federelement erzeugten Federkraft dienen. Hierdurch wird die Bewegung des Spannarms bei einem Schlagen des Zugmittels begrenzt und vermieden, dass sich der Spannarm bzw. die Spannrolle in einem soichen Fall um ein unakzeptables Wegstück vom Zugmittel entfernt. Weiterhin sind zwei in den Zeichnungen nicht dargestellte Anschläge, sogenannte Montageanschläge für die Spannarme vorgesehen, die verhindem, dass sich das Federelement entspannen kann. D.h., in der nicht eingebauten Stellung liegen die Spannarme an den Montageanschlägen an, wird anschließend das Zugmittel aufgelegt, werden die Spannarme entgegen der Federkraft vom vorgespannten Zugmittel auseinander bewegt.

### Bezugszeichen

- 1: Spanneinrichtung
- 2: Aggregat
- 3: gehäusartiges Teil
- 4: Bodenabschnitt
- 5: Wandabschnitt
- 6: Deckelabschnitt
- 7: Spannarm
- 8: Spannarm
- 9: Lagerabschnitt
- 10: Lagerabschnitt
- 11: Gleit- oder Radiallager
- 12: Gleit- oder Radiaftager
- 13: Ringraum
- 14: Federelement
- 15: Dämpfungselement
- 16: Dämpfungselement
- 17: Triebwelle
- 18: Riemen- oder Kettenscheibe
- 19: Befestigungsschraube
- 20: Spannrolle
- 21: Spannrolle
- 22: Zugmitteltrieb
- 23: Zugmittel
- 23a: Zugmittelabschnitt
- 23b: Zugmittelabschnitt
- 24: Kurbelwelle
- 25: Spanneinrichtung
- 26: Spannarm
- 27: Spannarm
- 28: Riemen- oder Kettenscheibe
- 29: Spanneinrichtung
- 30: gehäuseartiges Teil
- 31: Befestigungsbund
- 32: Flansch
- 33: Befestigungsbohrung
- 34: Riemen- oder Kettenscheibe
- 35: Welle
- 36: Lager
- 37: zylindrische Öffnung
- 38: Ring
- 39: Befestigungsabschnitt
- 40: Keilwelleninnenprofil
- 41: Spanneinrichtung
- 42: gehäuseartiges Teil
- 43: nicht vergeben
- 43: Flansch
- 44: horizontaler Abschnitt
- 45: Befestigungsbund
- 46: Lagerabschnitt
- 47: Spannarm
- 48: Lagerabschnitt
- 49: Spannarm
- 50: Reib- oder Dämpfungselement
- 51: Reib- oder Dämpfungselement
- 52: Welle
- 53: Verbindungsabschnitt
- 54: Flansch
- 55: Riemen- oder Kettenscheibe
- A, B: Pfeil

## Patentansprüche

1. Spanneinrichtung (1) für Zugmittel (23) wie Riemen oder Kette, mit einem gehäuseartigen Teil (3), in dem ein Spannmittel und ein dieses belastendes Federelement (14) zum Spannen des Zugmittels aufgenommen sind, wobei die Spanneinrichtung (1) an einem eine Triebwelle (17) aufweisenden Aggregat des Zugmitteltriebs bei drehfester Anordnung des gehäuseartigen Teils (3), die Triebwelle (17) umgreifend anbringbar ist, **dadurch gekennzeichnet, dass** das Spannmittel zwei im gehäuseartigen Teil um Achsen und gegeneinander drehbar gelagerte Spannarme (7, 8, 26, 27, 47, 49) umfasst, die mittels des gemeinsamen Federelements (14), das mit einem Ende am einen Spannarm und mit dem anderen Ende am anderen Spannarm gehaltert ist, federbelastet sind, wobei, ohne Reibungsdämpfung zwischen den beiden Spannarmen, zwischen jedem Spannarm und dem gehäuseartigen Teil ein Reib- oder Dämpfungselement (15, 16) vorgesehen ist.

2. Spanneinrichtung nach Anspruch 1, **dadurch gekennzeichnet, dass** jeder Spannarm (7, 8, 26, 27, 47, 49) einen ringartigen Lagerabschnitt (9, 10, 46, 48) aufweist, der einen zylindrischen Wandabschnitt (5, 45) des gehäuseartigen Teils (3, 30, 42) umgreift, wobei der Lagerabschnitt (9, 46) des ersten Spannarms direkt am zylindrischen Wandabschnitt drehgelagert ist und der Lagerabschnitt (10, 48) des zweiten Spannarms in den des ersten Spannarms eingreift und an diesem drehgelagert ist.

3. Spanneinrichtung nach Anspruch 2, **dadurch gekennzeichnet, dass** die Lagerabschnitte (9, 10, 46, 48) über Gleit- oder Radiallager (11, 12) gelagert sind.

4. Spanneinrichtung nach Anspruch 2, **dadurch gekennzeichnet, dass** das Federelement (14) in einem zwischen den ineinandergreifenden Lagerabschnitten (9, 10, 46, 48) gebildeten Ringraum (13) aufgenommen ist.

5. Spanneinrichtung nach Anspruch 1, **dadurch gekennzeichnet, dass** das zwischen den Spannarmen (7, 8, 26, 27, 47, 49) befindliche Federelement (14) die Spannarme (7, 8, 26, 27, 47, 49) axial gegen die Reib- oder Dämpfungselemente (15, 16, 50, 51) drängt.

6. Spanneinrichtung nach Anspruch 1, **dadurch gekennzeichnet, dass** das Reib- oder Dämpfungselement (15, 16, 50, 51) eine Reibscheibe oder ein Reibbelag ist.

7. Spanneinrichtung nach Anspruch 1, **dadurch gekennzeichnet, dass** das gehäuseartige Teil (3, 30, 42) einen Bodenabschnitt (4, 44), einen Wandabschnitt (5, 45) und einen Deckelabschnitt (6, 43) aufweist und einen nach außen offenen, im wesentlichen C-förmigen Querschnitt besitzt.

8. Spanneinrichtung nach Anspruch 7, **dadurch gekennzeichnet, dass** das gehäuseartige Teil (30) an einem einen Befestigungsbund (31) aufweisenden Flansch (32), mittels welchem die Spanneinrichtung am Aggregat befestigbar ist, angeordnet ist.

9. Spanneinrichtung nach Anspruch 7, **dadurch gekennzeichnet, dass** der Bodenabschnitt (44) und der Wandabschnitt (45) mittels eines Flanschs (43) gebildet sind, der zur Befestigung der Spanneinrichtung am Aggregat dient.

10. Spanneinrichtung nach Anspruch 1, **dadurch gekennzeichnet, dass** in einer der Aufnahme der Triebwelle des Aggregats dienenden Öffnung des gehäuseartigen Teils oder eines das gehäuseartige Teil tragenden Flanschs eine eine Riemen- oder Kettenscheibe (34, 51) tragende Welle (35, 52) drehbar angeordnet ist, die Verbindungsmittel zum Herstellen einer Drehverbindung mit der Triebwelle des Aggregat aufweist.

11. Spanneinrichtung nach Anspruch 10, **dadurch gekennzeichnet, dass** die Verbindungsmittel als Zahnprofil (40), vorzugsweise als Innenprofil ausgebildet sind.

12. Spanneinrichtung nach Anspruch 11, **dadurch gekennzeichnet, dass** das Zahnprofil ein Keilwellenprofil ist.

13. Spanneinrichtung nach Anspruch 1, **dadurch gekennzeichnet, dass** jedem Spannarm ein die Bewegung des Spannarms entgegen der Federkraft begrenzender Anschlag vorgesehen ist.

14. Spanneinrichtung nach Anspruch 1, **dadurch gekennzeichnet, dass** jedem Spannarm ein die federkraftbedingte Bewegung begrenzender Anschlag zugeordnet ist.

15. Spanneinrichtung nach Anspruch 1, **dadurch gekennzeichnet, dass** die aus dem gehäuseartigen Teil nach außen ragenden Spannarme (7, 8) derart ausgebildet bzw. geformt sind, dass eine an der Triebwelle befestigbare oder drehbar an der Spanneinrichtung integrierte topfartige Riemen- oder Kettenscheibe (18) das gehäuseartige Teil (3) zumindest teilweise seitlich umgreift.

16. Anordnung als Teil eines Zugmitteltriebs, insbesondere eines Riementriebs, umfassend eine Spanneinrichtung nach einem der Ansprüche 1 bis 15 sowie ein als Startergenerator ausgebildetes Aggregat, an dem die Spanneinrichtung angeordnet ist.

17. Verwendung einer Spanneinrichtung nach einem der Ansprüche 1 bis 15 in einem Zugmitteltrieb in Verbindung mit einem im Zugmitteltrieb integrierten Aggregat in Form eines Startergenerators.

## Claims

1. Clamping device (1) for tensioning means (23) such as a belt or chain, having a housing-like part (3) which accommodates a clamping member and a spring element (14) bearing on it for tensioning the tensioning means, wherein the clamping device (1) can be mounted on a unit of the tension drive comprising a drive shaft (17) with the housing-like part (13) connected for rotation therewith, engaging round the drive shaft (17), **characterised in that** the clamping member has two clamping arms (7, 8, 26, 27, 47, 49) mounted in the housing-like part to be rotatable about axes and relative to one another, which are spring-loaded by means of the common spring element (14) one end of which is mounted on a clamping arm while the other end is mounted on the other clamping arm, while a friction or damping element (15, 16) is provided between each clamping arm and the housing-like part, without any attenuation of the friction between the two clamping arms.

2. Clamping device according to claim 1, **characterised in that** each clamping arm (7, 8, 26, 27, 47, 49) has a ring-shaped bearing portion (9, 10, 46, 48) which engages round a cylindrical wall portion (5, 45) of the housing-like part (3, 30, 42), the bearing portion (9, 46) of the first clamping arm being rotatably mounted directly on the cylindrical wall portion and the bearing portion (10, 48) of the second clamping arm engaging **in that** of the first clamping arm and being rotatably mounted thereon.

3. Clamping device according to claim 2, **characterised in that** the bearing portions (9, 10, 46, 48) are mounted on plain or radial bearings (11, 12).

4. Clamping device according to claim 2, **characterised in that** the spring element (14) is accommodated in an annular space (13) formed between the bearing portions (9, 10, 46, 48) engaging in one another.

5. Clamping device according to claim 1, **characterised in that** the spring element (14) located between the clamping arms (7, 8, 26, 27, 47, 49) presses the clamping arms (7, 8, 26, 27, 47, 49) axially against the friction or damping elements (15, 16, 50, 51).

6. Clamping device according to claim 1, **characterised in that** the friction or damping element (15, 16, 50, 51) is a friction disc or friction lining.

7. Clamping device according to claim 1, **characterised in that** the housing-like part (3, 30, 42) comprises a base portion (4, 44), a wall portion (5, 45) and a cover portion (6, 43) and has a substantially C-shaped cross section open on the outside.

8. Clamping device according to claim 7, **characterised in that** the housing-like part (30) is mounted on a flange (32) comprising a fixing collar (31), by means of which the clamping device can be attached to the unit.

9. Clamping device according to claim 7, **characterised in that** the base portion (44) and the wall portion (45) are formed by a flange (54) which serves to attach the clamping device to the unit.

10. Clamping device according to claim 1, **characterised in that** a shaft (35, 52) carrying a belt or chain pulley (34, 51) is rotatably mounted in an opening in the housing-like part or a flange carrying the housing-like part, which serves to receive the drive shaft of the unit, said shaft (35, 52) comprising connecting means for establishing a rotary connection with the drive shaft of the unit.

11. Clamping device according to claim 10, **characterised in that** the connecting means are constructed as a serrated profile (40), preferably as an internal profile.

12. Clamping device according to claim 11, **characterised in that** the serrated profile is a splined shaft profile.

13. Clamping device according to claim 1, **characterised in that** each clamping arm is provided with a stop which limits the movement of the clamping arm counter to spring force.

14. Clamping device according to claim 1, **characterised in that** each clamping arm is associated with a stop which limits the movement caused by spring force.

15. Clamping device according to claim 1, **characterised in that** the clamping arms (7, 8) projecting outwards from the housing-like part are constructed or shaped so that a pot-shaped belt or chain pulley (18) capable of being secured to the drive shaft or rotatably integrated on the clamping device at least partially surrounds the housing-like part (3) at the sides.

16. Arrangement as part of a tensioning drive, particularly a belt drive, comprising a clamping device according to one of claims 1 to 15 and a unit constructed as a starter generator on which the clamping device is mounted.

17. Use of a clamping device according to one of claims 1 to 15 in a tensioning drive in conjunction with a unit integrated in the tensioning drive in the form of a starter generator.

## Revendications

1. Dispositif de tension (1) pour un moyen de traction (23) tel qu'une courroie ou une chaîne portant une partie (3) en forme de boitier recevant un moyen de tension ainsi qu'un élément de ressort (14) sollicitant celui-ci pour tendre le moyen de traction, le dispositif de tension (1) étant destiné à être installé sur un équipement ayant un arbre d'entraînement (17) du moyen d'entrainement par moyen de traction avec installation fixe en rotation de la partie en forme de boîtier (3), en entourant l'arbre d'entraînement (17),
**caractérisé en ce que**
le moyen de tension comporte deux bras tendeurs (7, 8, 26, 27, 47, 49) montes à rotation l'un par rapport à l'autre autour d'axes dans la partie en forme de bolder, ces bras étant claargés par ressort par l'élément de ressort commun (14) appliqué par une extrémlté contre un bras tendeur et par l'autre extrémité contre un autre bras tendeur, et
sans amortissement de friction entre les deux bras tendeurs, un élément de friction ou d'amortissement (15, 16) est prévu entre chaque bras tendeur et la partie en forme de boîtier.

2. Dispositif de tension selon la revendication 1,
**caractérisé en ce que**
chaque bras de tension (7, 8, 26, 27, 47, 49) comporte un segment de palier annulaire (9, 10, 46, 48) entourant un segment de paroi cylindrique (5, 45) de la partie en forme de boîtier (3, 30, 42), le segment de palier (9, 46) du premier bras tendeur étant monté à rotation directement sur le segment de paroi cylindrique et le segment de palier (10, 48) du second bras tendeur pénétrant dans le premier bras tendeur en étant monté à rotation dons celui-ci.

3. Dispositif de tension selon la revendication 2,
caraetérisé en ce que
les segments de palier (9, 10, 46, 48) sont montés par l'intermédiaire de paliers lasses ou radiaux (11, 12).

4. Dispositif de tension selon la revendication 2,
**caractérisé en ce que**
l'élément de ressort (14) est logé dans un espace annulaire (13) formé entre les segments de palier (9, 10, 46, 48) qui s'interpénètrent.

5. Dispositif de tension selon la revendication 1,
**caractérisé en ce que**
l'élément de ressort (14) qui se trouve entre les bras tendeurs (7, 8, 26, 27, 47, 49) pousse les bras tendeurs (7, 8, 26, 27, 47, 49) axialement contre des éléments de friction et d'amortissement (15, 16, 50, 51).

6. Dispositif de tension selon la revendication 1,
**caractérisé en ce que**
l'élément de frottement et d'amortissement (15, 16, 50, 51) est un Bisque ou une garniture de friction.

7. Dispositif de tension selon la revendication 1,
**caractérise en ce que**
la partie en forme de boitier (3, 30, 42) comprend un segment de fond (4, 44), un segment de paroi (5, 45) et un segment de couvercle (6, 43) ainsi qu'une section essentiellement en forme de C ouverte vers l'extérieur.

8. Dispositif de tension selon la revendication 7,
**caractérisé en ce que**
la partie (30) en forme de boîtier est installée sur une bride (32) ayant une collerette de fixation (31) et par laquelle le dispositif de tension se fixe sur l'équipement.

9. Dispositif de tension selon la revendication 7,
**caractérisé en ce que**
le segment de fond (44) et le segment de paroi (45) sont formés par une bride (43) servant à la fixation du dispositif de tension sur l'équipement.

10. Dispositif de tension selon la revendication 1,
**caractérisé en ce qu'**
un arbre (35, 52) portant une poulie à courroie ou à chaire (34, 51) est monte dans une ouverture de la partie en forme de boîtier ou d'une bride portant la partie en forme de boîtier et servant à recevoir l'arbre d'entrainement de l'équipement, cet arbre étant muni de moyens de liaison pour réaliser une liaison de rotation avec l'arbre d'entraînement de l'équipement.

11. Dispositif de tension selon la revendication 10,
**caractérisé en ce que**
les moyens de liaison sont réalisés sous la forme d'un profil denté (40) de préférence d'un profil intérieur.

12. Dispositif de tension selon la revendication 11,
**caractérisé en ce que**
le profil denté est un profit d'arbre cannelé.

13. Dispositif de tension selon la revendication 1,
**caractérisé en ce que**
pour chaque bras tendeur, il est prévu une butée limitant le mouvement du bras tendeur contre la force développée par le ressort.

14. Dispositif de tension selon la revendication 1,
**caractérisé en ce qu'**
une butée limitant le mouvement causé par la force du ressort est associée à chaque bras tendeur.

15. Dispositif de tension selon la revendication 1,
**caractérisé en ce que**
les bras tendeurs (7, 8) venant en saillie de la ponde en forme de boîtier sont réalisés ou formés pour qu'une poulie à courroie ou à ehaîne (18) en forme de pot, intégrée dans le dispositif de tension et qui se fixe ou se monte à rotation sur l'arbre d'entrainement, entoure latéralement au moins partiellement la pièce en forme de bonier (3).

16. Installation faisant partie d'un moyen d'entrainement par un moyen de traction notarnment d'un entraînement à courroie comprenant un dispositif de tension selon l'une quelconque des revendications 1 à 15, ainsi qu'un équipement en forme de démarreur-générateur sur lequel est installé le dispositif de tension.

17. Application d'un dispositif de tension selon l'une quelconque des revendications 1 à 15 dans un moyen d'entraînement par traction en liaison avec un équipement intégré dans le moyen d'entraînement par traction sous la forme d'un démarreur-générateur.
